# EUROPÄISCHE PATENTSCHRIFT

(11) **EP 0 475 104 B1**
(45) Veröffentlichungstag und Bekanntmachung des Hinweises auf die Patenterteilung: **28.09.1994**
(21) Anmeldenummer: 91113701.6
(22) Anmeldetag: 15.08.1991
(51) Int. Cl.: C01G 23/053, C22B 34/12

(54) **Verfahren zur Aufarbeitung von Aufschlussrückständen aus der Titandioxidproduktion**
Process for working up digestion residues of titanium dioxide production
Procédé de traitement des matières résiduelles de la production de bioxyde de titane

(30) Priorität: 28.08.1990 DE 4027105
(43) Veröffentlichungstag der Anmeldung: 18.03.1992
(73) Patentinhaber: BAYER AG, 51368 Leverkusen (DE)
(72) Erfinder: Kröckert, Bernd, Dr., W-4230 Wesel (DE); Kischkewitz, Jürgen, Dr., D-4030 Ratingen 6 (DE); Wiederhöft, Gerhard, W-4150 Krefeld (DE)

(56) Entgegenhaltungen:
- US-A- 4 321 237
- CHEMICAL ABSTRACTS, vol. 92, no. 24, Juni 1980, Columbus, Ohio, US;abstract no. 199868S, I.C.TUNG ET AL.: 'recovery of titanium dioxide' Seite 80;Spalte 2 ;

## Beschreibung

Die Erfindung betrifft ein Verfahren zur Aufarbeitung des Aufschlußrückstandes aus der Titandioxidproduktion nach dem Sulfatverfahren, bei der Ilmenit und/oder Schlacke mit Schwefelsäure aufgeschlossen wird und nach der Aufarbeitung des aufgeschlossenen Gemisches ein Feststoff mit Titandioxidgehalten von 20 bis 60 %, bezogen auf den Feststoffgehalt, als Rückstand anfällt.

Bei der Herstellung von Titandioxidpigmenten nach dem sogenannten Sulfatverfahren wird Ilmenit und/oder Schlacke mit Schwefelsäure aufgeschlossen (Ullmanns Encyklopädie der technischen Chemie, 4. Auflage, Band 18, Pigmente anorganisch, S. 574 bis 575). Nach dem Auflösen des dabei entstehenden Kuchens wird der ungelöste Feststoff über Eindicker und Drehfilter gegebenenfalls mit Filterhilfsmitteln abgetrennt und anschließend deponiert. Der deponierte Feststoff enthält noch 20 bis 60 % TiO₂, das jedoch unter den üblichen Bedingungen des Verfahrens nicht aufgeschlossen werden kann und deshalb verworfen werden muß.

Es ist allerdings bekannt, den anfallenden Aufschlußrückstand mit Schlacke abzumischen und wieder in den Aufschlußprozeß zurückzuführen (DE-A-2 951 749). So ist es möglich, gemeinsam mit Schlacke noch weiteres TiO₂ aus dem Rückstand herauszulösen. Der Nachteil dabei ist jedoch, daß die Gesamtausbeute beim Aufschluß und damit die Kapazität deutlich verringert wird. Zudem wird so der Rückstand kontinuierlich im Aufschluß angereichert, was zu Schwierigkeiten bei der Prozeßführung führt.

In Chemical Abstracts, Vol. 22, no. 24, Juni 1980, 1998685 wird ein Verfahren beschrieben, bei dem ungelöster Ilumenitrückstand aus der Titandioxid-Produktion mit 3-13,5 % Natriumchlorid und 50-65 %iger Schwefelsäure gemischt und auf 150-165°C erhitzt wird, um Titandioxid zu gewinnen.

Aufgabe war es daher, die Menge des Aufschlußrückstandes aus der Titandioxidproduktion zu reduzieren, ohne das Verfahren der Titandioxidpigmentherstellung negativ zu beeinflussen, und die Titandioxidausbeute möglichst nicht gleichzeitig zu vermindern bzw. die Ausbeute sogar noch zu vergrößern.

Diese Aufgabe konnte durch das erfindungsgemäße Verfahren gelöst werden.

Gegenstand der Erfindung ist ein Verfahren zur Aufarbeitung des Aufschlußrückstandes aus der Titandioxidproduktion nach dem Sulfatverfahren, bei der Ilmenit und/oder Schlacke mit Schwefelsäure aufgeschlossen wird und nach der Aufarbeitung des dabei entstehenden Kuchens ein Feststoff mit Titandioxidgehalten von 20 bis 60 %, bezogen auf den Feststoffgehalt als Rückstand verbleibt, welches dadurch gekennzeichnet ist, daß der Aufschlußrückstand nur mit frischer, 96 %iger Schwefelsäure, Schwefelsäure aus der Aufarbeitung und/oder Oleum in einem Gewichtsverhältnis von TiO₂ zu H₂SO₄ von 1:1 bis 1:3,5 gemischt wird und die Mischung durch Zufuhr von Energie auf Temperaturen von 140°C bis 300°C erhitzt wird, bei dieser Temperatur 15 Minuten bis 20 Stunden, vorzugsweise 30 Minuten bis 8 Stunden, verweilt und der daraus erhaltene Aufschlußkuchen weiter aufgearbeitet und der Hydrolyse zugeführt wird.

Überraschenderweise läßt sich aus dem "nicht mehr aufschließbaren" Aufschlußrückstand mit dem erfindungsgemäßen Verfahren weiteres TiO₂ herauslösen.

Bevorzugt wird als Aufschlußrückstand das Material eingesetzt, welches bei der Aufarbeitung der Aufschlußmasse am Eindickerunterlauf, auf dem Precoatfilter, bei der Feinfiltration und/oder an anderen Stellen bei der Aufschlußaufarbeitung anfällt.

Die Aufarbeitung des Aufschlußrückstandes erfolgt bevorzugt in Schnecken, Drehrohren oder ähnlichen Aggregaten oder einer Kombination dieser Aggregate oder in Rührbehältern.

Vorzugsweise erfolgt der Aufschluß des Rückstandes in zwei Stufen, wobei in der ersten Stufe die Mischung aus Rückstand und Schwefelsäure bis zu einer Temperatur von 140 bis 300°C erhitzt wird und in der zweiten Stufe die Reifung bei dieser Temperatur erfolgt.

Die Aufheizphase auf 140 bis 300°C beträgt bevorzugt 15 Minuten bis 3 Stunden.

Vor der Aufheizphase wird die Mischung gegebenenfalls im Trockenschrank, Sprühtrockner oder Spin-Flash-Trockner getrocknet, um dann die aufgeheizte Mischung reifen zu lassen.

Die Zufuhr der Energie im erfindungsgemäßen Verfahren erfolgt wie in DE-A-1 792 623, US-A-2 098 025 oder US-A-2 098 055 beschrieben.

Die Aufarbeitung des aufgeschlossenen Rückstandes erfolgt derart, daß die Aufschlußmasse zuerst mit Wasser verdünnt wird und dann nach den üblichen Bedingungen des Sulfatprozesses weiterverarbeitet wird.

Die Durchführung des erfindungsgemäßen Verfahrens hängt von der gewählten Temperatur und der Verweilzeit ab. Wählt man eine niedrige Temperatur und eine hohe Verweilzeit, so ist es möglich, das Verfahren in einem gerührten Behälter durchzuführen. Nimmt man eine hohe Temperatur, bei der sich das Material verfestigt, dann bieten sich Aufschlußschnecken (US-A-2 098 025, US-A-2 098 055), Drehrohre oder ähnliche Aggregate an.

Die Erfindung soll anhand der folgenden Beispiele näher erläutert werden.

### Beispiel 1

3 kg Drehfilterabwurf aus der Aufschlußsuspension der Titandioxidproduktion mit einem Feststoffgehalt von 56 % und einem TiO₂-Gehalt von 51 %, bezogen auf den Feststoff, wird mit 70 %iger Schwefelsäure aus der Wiederaufarbeitung so vermischt, daß ein Gewichtsverhältnis von TiO₂ zu H₂SO₄ von 1:2 entsteht, Die Mischung wird in einem Rührbehälter 7 Stunden unter Rückfluß erhitzt. Hierbei stellt sich eine Temperatur von 150 bis 155°C ein. Der ungelöste Rückstand wird abfiltriert und dann der Titangehalt in Lösung und im zurückbleibenden Feststoff, gerechnet als TiO₂, nach den üblichen naßchemischen Methoden der Analytik ermittelt. Hieraus ergibt sich ein Aufschlußgrad von 57 %, bezogen auf den Feststoffanteil TiO₂, im Drehfilterabwurf. Anschließend wird die übliche Hydrolyse durchgeführt, abfiltriert und das Titanoxidhydrat kalziniert.

### Beispiel 2

Die Mischung aus Beispiel 1 wurde in ein indirekt beheiztes Drehrohr bei einer Innentemperatur von 250°C gegeben. Die Verweilzeit betrug 3,5 Stunden. Der Aufschlußgrad beträgt 65 %.

### Beispiel 3

In der Mischung aus Beispiel 1 wird das TiO₂ zu H₂SO₄-Verhältnis mit 1:1,6 eingestellt. 5 l der Suspension werden in einen Rührbehälter, der auf 210°C vorgeheizt ist, gegeben. Das gesamte Abgas wird abgeleitet. Nach 105 Minuten hat die Mischung, die unter intensiver Durchmischung getrocknet ist, die Reifetemperatur erreicht und wird noch weitere 100 Minuten bei 210°C gehalten. Die Aufarbeitung des fertigen Produktes führt zu einem Aufschlußgrad von 84 %, bezogen auf den TiO₂-Gehalt im eingesetzten Feststoff. Anschließend wird hydrolysiert.

### Beispiel 4

Es wird wie in Beispiel 3 gearbeitet, jedoch sind die Behälter auf 180°C vorgeheizt, und die Reifung erfolgt über 6 Stunden bei dieser Temperatur. Es ergibt sich ein Aufschlußgrad von 79 %.

### Beispiel 5

Material aus dem Eindickerunterlauf, d.h. vor dem Drehfilter, somit ohne Filterhilfsmittel, wird filtriert, gewaschen, getrocknet und gemahlen. Der Feststoff, der 51 % TiO₂ enthält, wird mit 96 %iger H₂SO₄ so gemischt, daß ein Gewichtsverhältnis von TiO₂ zu H₂SO₄ von 1:3 entsteht. Das Gemisch wird getrocknet und bei 220°C 30 Minuten erhitzt. Man erhält einen Aufschlußgrad von 66 %.

### Vergleichsbeispiel 1

Der Versuch wurde unter den Bedingungen des Beispiels 1 durchgeführt mit dem Unterschied, daß ein TiO₂-H₂SO₄-Verhältnis von 1:4 entsteht. Der Aufschlußgrad beträgt 56 %. Die übliche Hydrolyse kann anschließend nicht mehr durchgeführt werden (kaum und dann schlechte bzw. gar keine Ausfällung).

### Vergleichsbeispiel 2

Der Versuch wurde unter den Bedingungen des Beispiels 3 durchgeführt mit dem Unterschied, daß ein Verhältnis von TiO₂ zu H₂SO₄ von 1:0,8 eingestellt wird. Das Lösen des Aufschlußkuchens ist nicht möglich. Wahrscheinlich beginnt gleichzeitig mit dem Lösevorgang bereits unkontrolliert die Hydrolye.

## Patentansprüche

1. Verfahren zur Aufarbeitung des Rückstandes aus der Titandioxidproduktion nach dem Sulfatverfahren, bei der Ilmenit und/oder Schlacke mit Schwefelsäure aufgeschlossen wird und nach der Aufarbeitung ein Feststoff mit Titandioxidgehalten von 20 bis 60 %, bezogen auf den Feststoffgehalt als Rückstand, verbleibt, dadurch gekennzeichnet, daß der Aufschlußrückstand nur mit frischer, 96 %iger Schwefelsäure, Schwefelsäure aus der Aufarbeitung und/oder Oleum in einem Gewichtsverhältnis von TiO₂ zu H₂SO₄ von 1:1 bis 1:3,5 gemischt wird und die Mischung durch Zufuhr von Energie auf Temperaturen von 140°C bis 300°C, erhitzt wird, bei dieser Temperatur 15 Minuten bis 20 Stunden, vorzugsweise 30 Minuten bis 8 Stunden, verweilt und der daraus erhaltene Aufschlußkuchen weiter aufgearbeitet und der Hydrolyse zugeführt wird.

2. Verfahren nach Anspruch 1, dadurch gekennzeichnet, daß als Rückstand das Material auf dem Eindickerunterlauf, vom Precoatfilter, aus der Feinfiltration und/oder von anderen Positionen der Aufschlußaufarbeitung eingesetzt wird.

3. Verfahren zur Aufarbeitung des Rückstandes aus der Titandioxidproduktion nach einem der Ansprüche 1 oder 2, dadurch gekennzeichnet, daß der Aufschlußrückstand in Schnecken, Drehrohren oder ähnlichen Aggregaten oder einer Kombination dieser Aggregate oder in Rührbehältern, aufgeschlossen wird.

4. Verfahren nach einem der Ansprüche 1 bis 3, dadurch gekennzeichnet, daß der Aufschluß in zwei Stufen verläuft, wobei in der ersten Stufe die Mischung aus Rückstand und Schwefelsäure bis zu einer Temperatur von 140 bis 300°C erhitzt wird und in der zweiten Stufe die Reifung bei dieser Temperatur erfolgt.

5. Verfahren nach einem der Ansprüche 1 bis 4, dadurch gekennzeichnet, daß die Aufheizphase auf eine Temperatur von 140 bis 300°C 15 Minuten bis 3 Stunden beträgt.

6. Verfahren nach einem der Ansprüche 1 bis 5, dadurch gekennzeichnet, daß vor der Aufheizphase die Mischung im Trockenschrank, Sprühtrockner oder Spinflash-Trockner getrocknet wird und dann die Reifung erfolgt.

## Claims

1. A process for working up the residue from the production of titanium dioxide by the sulphate process, in which ilmenite and/or slag is digested with sulphuric acid and a solid with a titanium dioxide content of 20 to 60%, with reference to the solids content, remains as residue after working up, characterised in that the digestion residue is mixed only with fresh, 96% strength sulphuric acid, sulphuric acid from the working up process and/or oleum in a ratio by weight of TiO₂ to H₂SO₄ of 1:1 to 1:3.5 and the mixture is heated to temperatures of 140°C to 300°C by the introduction of energy, maintained at this temperature for 15 minutes to 20 hours, preferably 30 minutes to 8 hours, and the digestion cake thus obtained is further worked up and hydrolysed.

2. A process according to Claim 1, characterised in that the residue used is the material from the thickener underflow, from the precoat filter, from fine filtration and/or from some other position in the digestion process.

3. A process for working up the residue from the production of titanium dioxide according to Claims 1 or 2, characterised in that the digestion residue is digested in screws, revolving tubes or similar units or a combination of these units or in stirred vessels.

4. A process according to one of Claims 1 to 3, characterised in that digestion takes place in two stages, wherein in the first stage the mixture of residue and sulphuric acid is heated to a temperature of 140 to 300°C and in the second stage maturation takes place at this temperature.

5. A process according to one of Claims 1 to 4, characterised in that the heating phase to attain a temperature of 140 to 300°C lasts for 15 minutes to 3 hours.

6. A process according to one of Claims 1 to 5, characterized in that the mixture is dried in a drying cabinet, spray-dyer or spin-flash dryer before the heating phase and that maturation then takes place.

## Revendications

1. Procédé de traitement du résidu de dissolution de la production de dioxyde de titane selon le procédé au sulfate dans lequel on attaquè de l'ilménite et/ou des laitiers par de l'acide sulfurique et après le traitement du mélange attaqué, on obtient un solide ayant des teneurs en dioxyde de titane comprises entre 20 et 60 %, par rapport à la teneur en solide qui constitue un résidu, qui est caractérisé en ce qu'on mélange le résidu d'attaque seulement avec de l'acide sulfurique frais à 96 %, avec de l'acide sulfurique du traitement et/ou de l'oléum en proportion pondérale de TiO₂ à H₂SO₄ de 1 : 1 à 1 : 3,5 et on chauffe le mélange par apport d'énergie à des températures comprises entre 140°C et 300°C, on maintient cette température entre 15 min et 20 h, de préférence 30 min à 8 h et on continue de traiter le gâteau d'attaque ainsi obtenu et on le conduit à l'hydrolyse.

2. Procédé selon la revendication 1, caractérisé en ce qu'on utilise comme résidu le matériau de l'aval de l'épaississeur, du filtre précoat, et de la filtration fine et/ou d'autres endroits du traitement d'attaque.

3. Procédé de traitement du résidu de la production de dioxyde de titane selon l'une des revendications 1 ou 2, caractérisé en ce qu'on attaque le résidu d'attaque dans des vis, de tubes rotatifs ou appareils analogues ou dans une combinaison de ces appareils ou dans des cuves agitées.

4. Procédé selon l'une des revendications 1 à 3, caractérisé en ce que l'attaque a lieu en deux étapes, à la première étape, on chauffe le mélange du résidu et de l'acide sulfurique jusqu'à une température comprise entre 140 et 300°C et à la deuxième étape a lieu le mûrissement à cette température.

5. Procédé selon l'une des revendications 1 à 4, caractérisé en ce que la phase de chauffage à une température comprise entre 140 et 300°C dure 15 min à 3h.

6. Procédé selon l'une des revendications 1 à 5, caractérisé en ce qu'avant la phase d'échauffement, on sèche le mélange dans une étuve, dans un atomiseur ou dans un sécheur Spin-flash et ensuite a lieu le mûrissement.
